# EUROPEAN PATENT APPLICATION

(11) **EP 4 216 506 A1**
(43) Date of publication of application: **26.07.2023**
(21) Application number: 21884575.8
(22) Date of filing: 11.08.2021
(51) Int. Cl.: H04L 45/18

(54) **ROUTING ADVERTISEMENT METHOD, ROUTING LOOP DETECTION METHOD, AND DEVICE**

(30) Priority: 28.10.2020 CN 202011176874; 13.01.2021 CN 202110045032
(71) Applicant: Huawei Technologies Co., Ltd., Shenzhen, Guangdong 518129 (CN)
(72) Inventor: LIU, Chuan, Shenzhen, Guangdong 518129 (CN); LU, Gongyu, Shenzhen, Guangdong 518129 (CN); WANG, Haibo, Shenzhen, Guangdong 518129 (CN); ZHUANG, Shunwan, Shenzhen, Guangdong 518129 (CN)
(74) Representative: Maiwald GmbH
(86) International application number: PCT/CN2021/111950
(87) International publication number: WO 2022/088843

(57) **Abstract**

Embodiments of this application disclose a route advertisement method, a route loop check method, and a device, so as to resolve a route loop problem in a network, and improve reliability of service packet transmission. The route advertisement method includes the following steps: A first network device receives a first route advertisement message, where a first field of the first route advertisement message includes a device identifier, and routing information included in the first route advertisement message comes from a device corresponding to the device identifier. The first network device generates a second route advertisement message based on the first route advertisement message, where a second field of the second route advertisement message includes the device identifier, and the first field and the second field are different fields. The first network device sends the second route advertisement message to a second network device.

## Description

This application claims priority to Chinese Patent Application No. 202011176874.4, filed with the China National Intellectual Property Administration on October 28, 2020 and entitled "METHOD FOR IMPLEMENTING LOOP CHECK BY USING BGP SOO ATTRIBUTE", and claims priority to Chinese Patent Application No. 202110045032.3, filed with the China National Intellectual Property Administration on January 13, 2021 and entitled "ROUTE ADVERTISEMENT METHOD, ROUTE LOOP CHECK METHOD, AND DEVICE", which are incorporated herein by reference in their entireties.

### TECHNICAL FIELD

This application relates to the communication field, and in particular, to a route advertisement method, a route loop check method, and a device.

### BACKGROUND

To implement packet transmission between network devices, the network devices need to send route advertisement messages used for route advertisement to each other. For example, a network device A may send, to a network device B, a route advertisement message that carries routing information of the network device A. After receiving the route advertisement message from the network device A, the network device B may generate, based on the routing information in the route advertisement message, a route corresponding to the routing information of the network device A, to transmit a packet to the network device A based on the route. In addition, the network device B may further send the route advertisement message to another network device (for example, a network device C), so that the another network device can also send the packet to the network device B.

Currently, in some scenarios, a route loop problem may occur in a process of transmitting route advertisement messages between network devices. A packet may be looped between a plurality of network devices and cannot reach a destination device because of a route loop. Consequently, a normal service transmission requirement is affected.

### SUMMARY

Embodiments of this application provide a route advertisement method, a route loop check method, and a device, to resolve a route loop problem in a network, and improve reliability of service packet transmission.

According to a first aspect, a route advertisement method is provided. The method is applied to a first network device and specifically includes the following steps: A first network device receives a first route advertisement message, where the first route advertisement message includes routing information and a first field. The first field of the first route advertisement message includes a device identifier. The device identifier indicates that the routing information included in the first route advertisement message comes from a device corresponding to the device identifier. The first network device generates a second route advertisement message based on the first route advertisement message. The second route advertisement message includes a second field, and the second field includes the device identifier. The first network device sends the second route advertisement message to a second network device. The first route advertisement message and the second route advertisement message may be border gateway protocol (Border Gateway Protocol, BGP) update (update) messages. The first field and the second field are different fields of the BGP update message. For example, the first field is a field representing an originator identifier (originator identifier, Originator ID) attribute, and the second field is a field representing a source of origin (source of origin, SoO) attribute. When the first route advertisement message cannot reach the second network device due to some reasons (for example, a cross-network reason), the first network device generates, based on the first route advertisement message, the second route advertisement message that can be sent to the second network device. The second field of the second route advertisement message carries a value of the first field in the first route advertisement message, so that the second network device can determine, based on whether the value of the second field is a device identifier of the second network device, whether a route loop occurs, to implement route loop check, thereby improving reliability of service packet transmission.

There may be the following three possible implementations in which the first network device generates the second route advertisement message based on the first route advertisement message.

Implementation 1: The first network device generates the second route advertisement message based on the routing information included in the first route advertisement message, where the second route advertisement message includes the routing information.

Implementation 2: First, the first network device generates a corresponding route based on the routing information included in the first route advertisement message, and then generates the second route advertisement message based on the route.

Optionally, Implementation 2 may be specifically: The first network device generates a corresponding private network route based on the routing information included in the first route advertisement message, replicates the private network route to a virtual private network version 4 (virtual private network version 4, VPNv4) route, and generates the second route advertisement message based on the VPNv4 route, so as to transfer the device identifier across networks.

Implementation 3: The first network device deletes the first field of the first route advertisement message, and adds the second field, to obtain the second route advertisement message.

The foregoing three possible implementations do not constitute a limitation on this embodiment of this application, and a person skilled in the art may design the implementations based on an actual situation.

In a possible design, the first network device is a first provider edge (Provider Edge, PE) device. Receiving, by the first network device, the first route advertisement message may be receiving the first route advertisement message sent by a route reflector (router reflector, RR). The RR may carry the foregoing field representing the Originator ID attribute in the first route advertisement message, so as to carry the device identifier in the field. Optionally, the RR is a customer edge (Customer Edge, CE) device.

As mentioned above, the second field may be the field representing the source of origin SoO attribute. In a possible design, the field representing the SoO attribute may include an autonomous system (autonomous system, AS) specific extended community (specific extended community) attribute field, an internet protocol version 4 address (Internet Protocol version 4 address, IPv4 address) specific extended community (specific extended community) attribute field, or an opaque extended community (opaque extended community) attribute field of the BGP update message.

Specifically, the device identifier may be carried in a global administrator (global administrator) field in the AS specific extended community attribute or a global administrator field in the IPv4 address specific extended community attribute. If the device identifier is relatively long, optionally, one part of the device identifier may be carried in the global administrator field, and the other part may be carried in a local administrator (local administrator) field in the AS specific extended community attribute or a local administrator field in the IPv4 address specific extended community attribute.

Alternatively, the device identifier may be carried in a (value) value field in the opaque extended community attribute.

According to a second aspect, a route loop check method is provided. The method is applied to a second network device, and the second network device may be a PE device. The method includes the following steps: The second network device receives a second route advertisement message from a first network device, where the second route advertisement message includes a field representing an SoO attribute. For the description of the second route advertisement message, refer to the foregoing description. Details are not described herein again. When the second network device determines that a value of the field representing the SoO attribute is an identifier of the second network device, it indicates that routing information released by the second network device returns to the network device. Therefore, the second network device determines that a route loop occurs, and implements route loop check.

In a possible design, the method further includes: In response to determining that the route loop occurs, the second network device may directly discard the second route advertisement message, to avoid generating forwarding information based on the second route advertisement message; or the second network device generates forwarding information based on the routing information in the second route advertisement message, the second network device may set the forwarding information to be invalid or set a priority of the forwarding information to a relatively low priority, to avoid cyclic forwarding of a service packet, thereby ensuring reliability of service packet transmission. The forwarding information may be a forwarding entry.

In a possible design, a specific quantity of times of occurrence of the route loop may be allowed on the second network device. Specifically, the method further includes: when determining that a quantity of times of occurrence of the route loop exceeds a specific threshold, the second network device discards the second route advertisement message, or sets forwarding information obtained based on the second route advertisement message to be invalid or lowers a priority of the forwarding information. The specific threshold is an integer greater than or equal to 1.

In a possible design, the method further includes: The second network device receives a first route advertisement message from the first network device, where the first route advertisement message includes routing information and the field representing the SoO attribute. When the second network device determines that the value of the field representing the SoO attribute in the first route advertisement message is not the identifier of the second network device, it indicates that no route loop occurs. When a next hop of the second network device is an RR, the second network device may generate a third route advertisement message based on the routing information. The third route advertisement message includes the routing information in the first route advertisement message. In addition, the second network device may send the third route advertisement message to the RR, to implement advertisement of the routing information. For the description of the SoO attribute field, refer to the foregoing description. Details are not described herein again.

In a possible design, the identifier of the second network device is a router identifier (router ID) of the second network device, a number of the second network device in a network, or the like. This is not specifically limited in this embodiment of this application.

According to a third aspect, a route advertisement method is provided. The method is applied to a first network device, and the first network device may be a PE device. Specifically, the method includes: The first network device generates a first route advertisement message, where the first route advertisement message may be a BGP update message. The first route advertisement message includes routing information and a field representing an SoO attribute, and the routing information may be routing information of the first network device, or may be routing information of another network device. The field representing the SoO attribute carries an identifier of the first network device, and the identifier of the first network device may be a router ID of the first network device. The first network device sends the first route advertisement message to a next-hop network device, namely, a second network device. When the first network device receives a third route advertisement message, and a value of the field that represents the SoO attribute and that is included in the third route advertisement message is the identifier of the first network device, it indicates that the routing information released by the first network device returns to the network device. Therefore, it can be determined that a route loop occurs, and route loop check is implemented.

In a possible design, the first network device may receive a second route advertisement message from another device, and add the field representing the SoO attribute to the second route advertisement message, to obtain the first route advertisement message.

In a possible design, the method further includes: In response to determining that the route loop occurs, the first network device may directly discard the third route advertisement message if the first network device does not generate corresponding forwarding information based on the third route advertisement message. If the first network device has generated the corresponding forwarding information based on the third route advertisement message, the first network device may set the forwarding information obtained based on the third route advertisement message to be invalid or lower a priority of the forwarding information, to avoid cyclic forwarding of a service packet, thereby improving reliability of service packet transmission.

In a possible design, a specific quantity of times of occurrence of the route loop may be allowed on the first network device. Specifically, the method further includes: When determining that a quantity of times of occurrence of the route loop exceeds a specific threshold, the first network device discards the third route advertisement message, or sets forwarding information obtained based on the third route advertisement message to be invalid or lowers a priority of the forwarding information. The specific threshold is a positive integer greater than or equal to 1.

In a possible design, the field representing the SoO attribute includes a global administrator field in an AS specific extended community attribute or a global administrator field in an IPv4 address specific extended community attribute.

In a possible design, the field representing the SoO attribute further includes a local administrator field in the AS specific extended community attribute or a local administrator field in the IPv4 address specific extended community attribute.

In a possible design, the field representing the SoO attribute includes a value value field in an opaque extended community attribute.

According to a fourth aspect, a network device is provided, and is used in a network system including a plurality of network devices. The plurality of network devices include a first network device and a second network device. The network device is the first network device, and the first network device is configured to perform the method in any one of the first aspect and the possible designs of the first aspect. Specifically, the first network device includes a unit configured to perform the method in any one of the first aspect and the possible designs of the first aspect. Alternatively, the first network device is configured to perform the method in any one of the third aspect and the possible designs of the third aspect. Specifically, the first network device includes a unit configured to perform the method in any one of the third aspect and the possible designs of the third aspect.

According to a fifth aspect, a network device is provided, and is used in a network system including a plurality of network devices. The plurality of network devices include a first network device and a second network device. The second network device is configured to perform the method in any one of the second aspect and the possible designs of the second aspect. Specifically, the second network device includes a unit configured to perform the method in any one of the second aspect and the possible designs of the second aspect.

According to a sixth aspect, a network device is provided, and is used in a network system including a plurality of network devices. The plurality of network devices include a first network device and a second network device. The network device is the first network device, and the first network device includes a processor and a network interface. The network interface is configured to receive and send a packet. The processor is configured to perform the method in any one of the first aspect and the possible designs of the first aspect; or the processor is configured to perform the method in any one of the third aspect and the possible designs of the third aspect.

In a possible design, the first network device further includes a memory, and the memory may be configured to store instructions or program code. The processor is configured to invoke the instructions or program code in the memory to perform the method in any one of the first aspect and the possible designs of the first aspect; or the processor is configured to invoke the instructions or program code in the memory to perform the method in any one of the third aspect and the possible designs of the third aspect.

According to a seventh aspect, a network device is provided, and is used in a network system including a plurality of network devices. The plurality of network devices include a first network device and a second network device. The network device is the second network device, and the second network device includes a processor and a network interface. The network interface is configured to receive and send a packet. The processor is configured to perform the method in any one of the second aspect and the possible designs of the second aspect.

In a possible design, the second network device further includes a memory, and the memory may be configured to store instructions or program code. The processor is configured to invoke the instructions or program code in the memory to perform the method in any one of the second aspect and the possible designs of the second aspect.

According to an eighth aspect, a network system is provided. The network system includes the first network device in the fourth aspect and the second network device in the fifth aspect. Alternatively, the network system includes the first network device in the sixth aspect and the second network device in the seventh aspect.

According to a ninth aspect, a computer-readable storage medium is provided, including instructions, a program, or code. When the instructions, the program, or the code is executed on a computer, the computer is enabled to perform the method in any one of the first aspect, the second aspect, the third aspect, and the possible implementations of the foregoing three aspects.

According to a tenth aspect, a computer program product including computer instructions is provided. When the computer program product is run on a network device, the network device is enabled to perform the method provided in any one of the first aspect, the second aspect, the third aspect, and the possible implementations of the foregoing three aspects.

According to an eleventh aspect, a chip is provided, including a memory and a processor. The memory is configured to store instructions or program code. The processor is configured to: invoke the instructions or the program code from the memory and run the instructions or the program code, to perform the method in any one of the first aspect and the possible designs of the first aspect; or the processor performs the method in any one of the second aspect and the possible designs of the second aspect; or the processor performs the method in any one of the third aspect and the possible designs of the third aspect.

According to a twelfth aspect, a chip is provided. The chip includes a processor but does not include a memory. The processor is configured to read and execute instructions or program code stored in the memory outside the chip. When the instructions or the program code are executed, the processor performs the method in any one of the first aspect and the possible designs of the first aspect; or the processor performs the method in any one of the second aspect and the possible designs of the second aspect; or the processor performs the method in any one of the third aspect and the possible designs of the third aspect.

### BRIEF DESCRIPTION OF DRAWINGS

FIG. 1 is a schematic diagram of a BGP network architecture according to an embodiment of this application;
FIG. 2 is a schematic diagram of another BGP network architecture according to an embodiment of this application;
FIG. 3 is a schematic flowchart of a route advertisement and route loop check method according to an embodiment of this application;
FIG. 4 is a schematic diagram of a format of a field representing an Originator ID attribute according to an embodiment of this application;
FIG. 5 is a schematic diagram of a format of a field including an AS specific extended community attribute according to an embodiment of this application;
FIG. 6 is a schematic diagram of a format of a field including an IPv4 address specific extended community attribute according to an embodiment of this application;
FIG. 7 is a schematic diagram of a format of a field including an opaque extended community attribute according to an embodiment of this application;
FIG. 8A to FIG. 8C are a schematic flowchart of a route advertisement and route loop check method in a cross-network domain scenario according to an embodiment of this application;
FIG. 9 is a flowchart of another route advertisement and route loop check method according to an embodiment of this application;
FIG. 10 is a schematic diagram of a network architecture without a route reflector according to an embodiment of this application;
FIG. 11 is a schematic flowchart of a route advertisement and route loop check method according to an embodiment of this application;
FIG. 12 is a schematic diagram of a structure of a network device according to an embodiment of this application;
FIG. 13 is a schematic diagram of a structure of a network device according to an embodiment of this application;
FIG. 14 is a schematic diagram of a structure of a network device according to an embodiment of this application;
FIG. 15 is a schematic diagram of a structure of a network system according to an embodiment of this application;
FIG. 16 is a schematic diagram of a structure of a network device according to an embodiment of this application; and
FIG. 17 is a schematic diagram of a structure of a network device according to an embodiment of this application.

### DESCRIPTION OF EMBODIMENTS

Before the specific technical solutions are described, key terms in embodiments of this application are first described.

A route loop refers to a case in which a route advertisement message is released by a network device and then returned to the network device after passing through one or more network devices.

A service interruption may be caused by a route loop problem, and communication quality is severely affected. At present, some technical means can be used to resolve the route loop problem, and one of the technical means is applied to a network architecture including a route reflector (router reflector, RR).

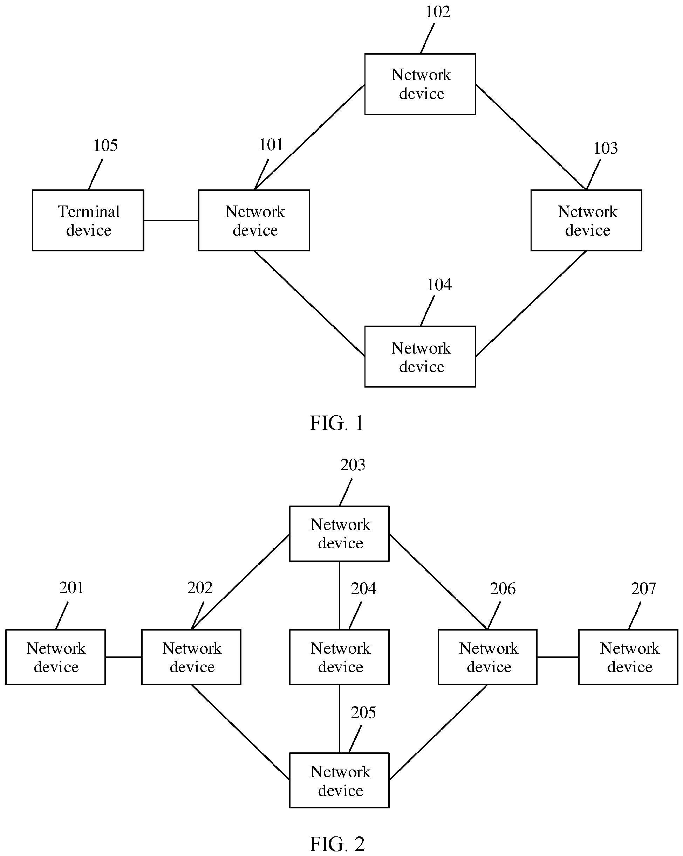

FIG. 1 is a schematic diagram of a network architecture of a border gateway protocol (Border Gateway Protocol, BGP). The network architecture includes a network device 101, a network device 102, a network device 103, a network device 104, and a terminal device 105. The terminal device 105 is connected to the network device 101, the network device 101 is connected to the network device 102, the network device 102 is connected to the network device 103, the network device 103 is connected to the network device 104, and the network device 104 is connected to the network device 101 (it should be noted that, a connection between network devices in this embodiment of this application may be a direct connection or an indirect connection). Both the network device 102 and the network device 104 are route reflectors.

The network device 101 generates forwarding information 1 of a route to the terminal device 105. A next hop of the forwarding information 1 is the terminal device 105. In addition, the network device 101 sends a route advertisement message 1 to the network device 102. The route advertisement message 1 carries routing information of the terminal device 105. Because the network device 102 is a route reflector, the network device 102 adds an originator identifier (originator identifier, Originator ID) attribute to the route advertisement message 1, to obtain a route advertisement message 2. A value of the Originator ID attribute is an originator identifier, used to identify a network device that initiates the route advertisement message 1, that is, the network device 101 in FIG. 1. In other words, it can be learned, based on the route advertisement message 2, that an originator of the route advertisement message is the network device 101. Then, the network device 102 sends the route advertisement message 2 to the network device 103. After receiving the route advertisement message 2, the network device 103 determines that the originator identifier carried in the route advertisement message 2 is different from an identifier of the network device 103, and generates, based on the routing information of the terminal device 105, forwarding information of a route to the terminal device 105, where a next hop of the forwarding information is the network device 102. In addition, the network device 103 sends the route advertisement message 2 to the network device 104. The network device 104 determines that the originator identifier has been carried in the route advertisement message 2, does not add a new originator identifier, continues to reuse the carried originator identifier, and directly sends the route advertisement message 2 to the network device 101.

Before sending the route advertisement message 1, the network device 101 has generated the forwarding information 1 of the route corresponding to the routing information of the terminal device 105. Therefore, a next hop of the forwarding information 1 is the terminal device 105. If the network device 101 generates, after receiving the route advertisement message 2, forwarding information 2 of the route to the terminal device 105, where a next hop of the forwarding information 2 is the network device 104, and the forwarding information 2 is selected from the forwarding information 1 and the forwarding information 2 to release the route outward, after the network device 103 receives a service packet whose destination device is the terminal device 105, the service packet enters a cycle of the network device 103-the network device 102-the network device 101-the network device 104-the network device 103, and cannot reach the terminal device 105. Consequently, a route loop problem is caused.

To resolve this problem, based on a current solution, if the network device 101 determines that the originator identifier in the route advertisement message 2 is the same as an identifier of the network device 101, the network device 101 discards the route advertisement message 2, that is, does not generate the route whose next hop is the network device 104 and that reaches the terminal device 105, to avoid a route loop problem.

However, the foregoing solution is not applicable to a scenario in which there is no route reflector in a network architecture, or a cross-network domain scenario in which there is a route reflector. In the cross-network domain scenario, a route loop problem may still occur when the foregoing Originator ID-based solution is used. With reference to an example, the following specifically describes the route loop problem that may occur when the Originator ID-based solution is used in the cross-network domain scenario.

FIG. 2 is a schematic diagram of another BGP-based network architecture.

The network architecture shown in FIG. 2 includes a network device 201, a network device 202, a network device 203, a network device 204, a network device 205, a network device 206, and a network device 207. The network device 201 is connected to the network device 202, the network device 202 is separately connected to the network device 203 and the network device 205, the network device 203 is connected to the network device 205 by using the network device 204, the network device 203 and the network device 205 are further both connected to the network device 206, and the network device 206 is connected to the network device 207.

The network device 201, the network device 202, and the network device 207 are all customer edge (Customer Edge, CE) devices, and the network device 202 is further a route reflector. The network device 203, the network device 205, and the network device 206 are all provider edge (Provider Edge, PE) devices, and the network device 204 is a provider (Provider, P) device. In a possible implementation, a route advertisement message is transmitted between the CE devices and between the CE devices and the PE devices by using an external border gateway protocol (External Border Gateway Protocol, eBGP), and a route advertisement message is transmitted between the PE devices by using an internal border gateway protocol (Internal Border Gateway Protocol, iBGP).

The network device 201 generates a route advertisement message 1, and sends the route advertisement message 1 to the network device 202. After receiving the route advertisement message 1, the network device 202 generates forwarding information 1 of a route (that is, a route to the network device 201) corresponding to routing information (that is, routing information to the network device 201) in the route advertisement message 1. A next hop of the forwarding information 1 is the network device 201. In addition, the network device 202 adds an Originator ID attribute to the route advertisement message 1 based on a reflective router function of the network device 202, to obtain a route advertisement message 2. A value of the Originator ID attribute is used to identify the network device 201. The network device 202 sends the route advertisement message 2 to the network device 203. Because the network device 203 is a PE device, after receiving the route advertisement message 2, the network device 203 generates a private network route corresponding to the routing information of the network device 201, and replicates the private network route to a VPNv4 route. After the replication, the network device 203 generates a route advertisement message 3 based on the VPNv4 route, and sends the route advertisement message 3 to the network device 204 of a VPNv4 network. It should be noted that, the route advertisement message 3 sent by the network device 203 to the network device 204 includes the routing information of the network device 201, but does not include the Originator ID attribute. Because a current protocol stipulates that the Originator ID attribute can be added only when the route reflector reflects a route in a same network. In other words, the Originator ID attribute can be added only when the Originator ID attribute is transmitted inside the private network or the VPNv4 network. The Originator ID attribute cannot be transmitted between the private network and the VPNv4 network.

After receiving the route advertisement message 3 sent by the network device 204, the network device 205 generates, based on the route advertisement message 3, a VPNv4 route to the network device 201, and replicates the VPNv4 route to the private network route. After the replication, the network device 205 generates a route advertisement message 4 based on the private network route, and sends the route advertisement message 4 to the network device 202 by using a private network neighbor.

After receiving the route advertisement message 4 from the network device 205, the network device 202 generates forwarding information 2 of a route (that is, the route to the network device 201) corresponding to routing information of the route advertisement message 4. A next hop of the forwarding information 2 is the network device 205. In other words, the route to the network device 201 has two pieces of forwarding information: the forwarding information 1 and the forwarding information 2. If the network device 202 selects the forwarding information 2 to advertise to the outside, a route loop: the network device 202-the network device 203-the network device 204-the network device 205-the network device 202 is formed.

To overcome the foregoing technical problems, embodiments of this application provide a route advertisement method, a route loop check method, and a device, to implement route loop check, and avoid a route loop problem.

The route advertisement and route loop check method provided in embodiments of this application may be applied to the network architecture shown in FIG. 2. The network device 201 to the network device 207 may be physical devices such as a router (router), a switch (switch), and a server having a routing function, or may be virtual apparatuses having a routing or switch function.

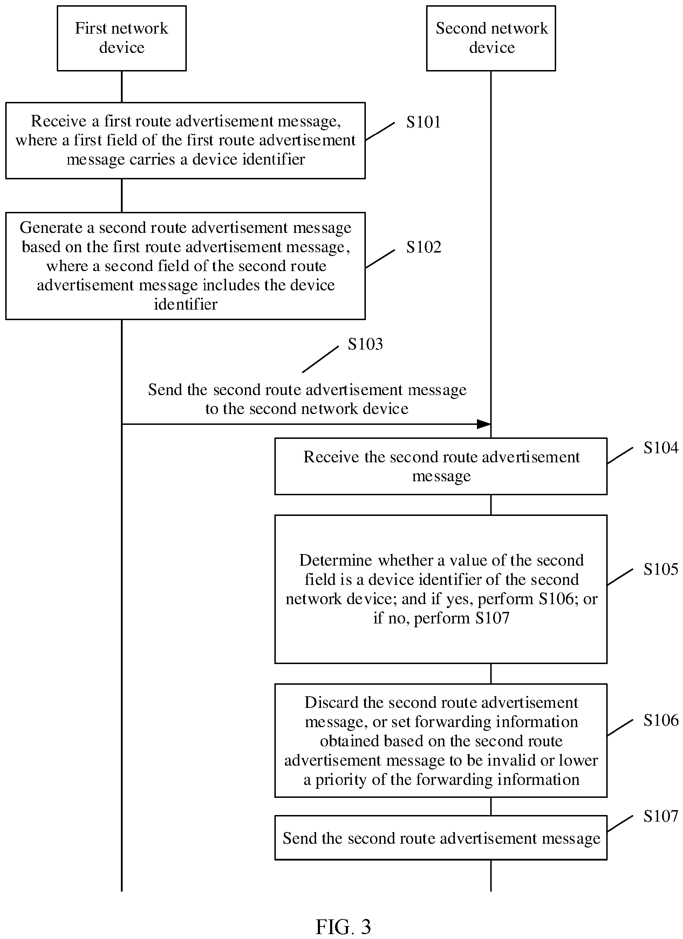

The following describes the method in detail with reference to FIG. 2 and FIG. 3.

FIG. 3 is a schematic flowchart of a route advertisement and route loop check method according to an embodiment of this application.

The route advertisement and route loop check method specifically includes the following steps.

S101: A first network device receives a first route advertisement message, where the first route advertisement message includes routing information and a first field, and the first field includes a device identifier.

In this embodiment of this application, the first network device may be the network device 203 in FIG. 2, that is, the first network device may be a PE device.

The first network device receives the first route advertisement message, where the first route advertisement message may be a BGP update message. The first route advertisement message may come from a route reflector, and the route reflector may be a CE device having a route reflector function, for example, the network device 202 in FIG. 2.

The first route advertisement message includes the routing information. After receiving the first route advertisement message, the first network device may generate forwarding information of a route corresponding to the routing information.

For example, the network device 203 receives a BGP update message 1 from the network device 202, where the BGP update message 1 carries routing information of the network device 201, and the network device 202 generates, based on the routing information of the network device 201, forwarding information of a route to the network device 201.

When the first route advertisement message comes from the route reflector, the first route advertisement message may further include the device identifier, and the routing information included in the first route advertisement message comes from a device corresponding to the device identifier. The device identifier may be carried in the first field of the first route advertisement message. If the first route advertisement message is a BGP update message, the first field may be a field representing an Originator ID attribute.

For example, the BGP update message 1 received by the network device 203 from the network device 202 carries the field representing the Originator ID attribute, and the field representing the Originator ID attribute carries a device identifier of the network device 201, indicating that routing information of the BGP update message 1 comes from the network device 201. The device identifier of the network device 201 may be a device identifier that uniquely identifies the network device 201, for example, a router identifier (router identifier, router ID) of the network device 201 or a number of the network device 201 in a network.

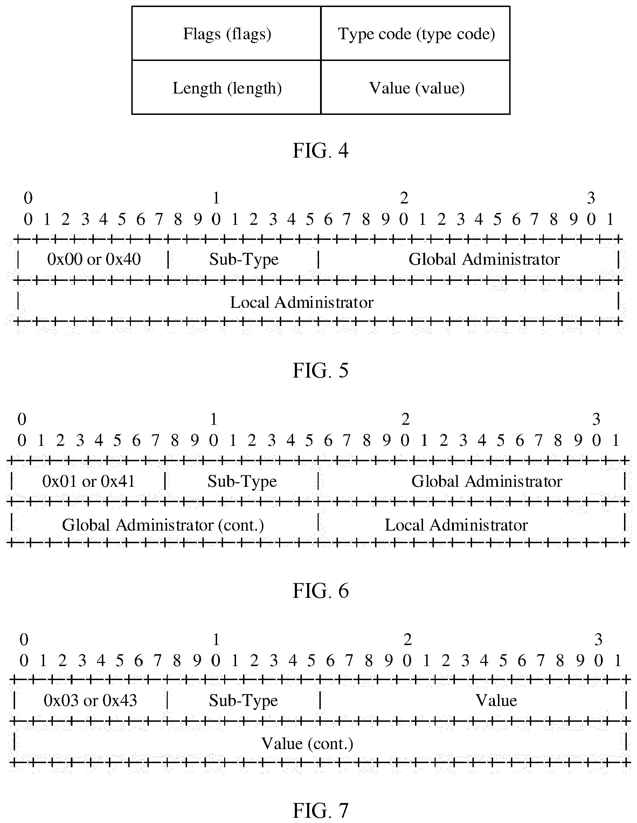

FIG. 4 is a schematic diagram of a format of a field representing an Originator ID attribute. In this figure, fields used to carry the Originator ID attribute include fields of flags (flags), type code (type code), a length (length), and a value (value). A value of the flags field may be 0x80, a value of the type code field may be 0x09, a value of the length field may be 0x04, and a value of the value field may be an originator identifier.

S102: The first network device generates a second route advertisement message based on the first route advertisement message, where the second route advertisement message includes a second field, and the second field includes the device identifier.

In this embodiment of this application, the second route advertisement message may be a BGP update message. The second route advertisement message includes the second field. The second field may be a field representing an SoO attribute, and a value of the field representing the SoO attribute includes the device identifier. In other words, the device identifier included in the second field is the same as the device identifier included in the first field.

In a first possible implementation, after receiving the first route advertisement message, the first network device generates the second route advertisement message based on the routing information included in the first route advertisement message. The second route advertisement message includes the routing information and the second field.

For example, after receiving the BGP update message 1, the network device 203 generates a BGP update message 2 based on the routing information to the network device 201 in the BGP update message 1. The BGP update message 2 includes the routing information to the network device 201 and the field representing the SoO attribute, and a value of the field representing the SoO attribute is a router ID of the network device 201.

In a second possible implementation, after receiving the first route advertisement message, the first network device may first generate a route corresponding to the routing information included in the first route advertisement message, and then generate the second route advertisement message based on the route. The route may be a VPNv4 route, an internet protocol version 4 (Internet Protocol version 4, IPv4) route, or an internet protocol version 6 (Internet Protocol version 6, IPv6) route.

For example, the network device 203 first generates, based on the BGP update message 1, a private network route to the network device 201, then replicates the private network route to a VPNv4 route, and generates the BGP update message 2 based on the VPNv4 route. The field representing the SoO attribute is carried in the BGP update message 2, and the value of the field representing the SoO attribute is the router ID of the network device 201.

In a third possible implementation, after the first network device receives the first route advertisement message, if the first field is included in the first route advertisement message, the first network device deletes the first field or sets a value of the first field to 0, and adds the second field, to obtain the second route advertisement message. A value of the second field is the same as the value of the first field, and both are device identifiers of a source device of the routing information in the first route advertisement message.

For example, the network device 203 may delete the field representing the Originator ID attribute from the BGP update message 1, that is, delete the router ID of the network device 201, and add the field representing the SoO attribute, where the value of the field representing the SoO attribute includes the router ID of the network device 201, to obtain the BGP update message 2.

In this embodiment of this application, the field representing the SoO attribute may include an autonomous system (autonomous system, AS) specific extended community (specific extended community) attribute field, an internet protocol version 4 address (Internet Protocol version 4 address, IPv4 address) specific extended community attribute field, or an opaque (opaque) extended community (extended community) attribute field.

FIG. 5 is a schematic diagram of a format of a field including an AS specific extended community attribute. In this figure, fields including the AS specific extended community attribute include a type field, a sub-type (sub-type) field, a global manager (global administrator) field, and a local administrator (local administrator) field of the extended community attribute. A value of the type field of the extended community attribute is 0x00 or 0x40, and indicates that the extended community attribute is the AS specific extended community attribute. A value of the sub-type field may indicate that one sub-type of the attribute is an SoO attribute. The device identifier may be entirely carried in the global administrator field, or one part is carried in the global administrator field, and the other part is carried in the local administrator field.

FIG. 6 is a schematic diagram of a format of a field including an IPv4 address specific extended community attribute. In this figure, fields including the IPv4 address specific extended community attribute include a type field, a sub-type field, a global administrator field and a continuous (cont.) field (the cont. field is an optional field) of the global administrator field, and a local administrator field of the extended community attribute. A value of the type field of the extended community attribute is 0x01 or 0x41, and indicates that the extended community attribute is the IPv4 address specific extended community attribute. A value of the sub-type field may indicate that one sub-type of the attribute is an SoO attribute. The device identifier may be entirely carried in the global administrator field, or one part is carried in the global administrator field, and the other part is carried in the local administrator field.

FIG. 7 is a schematic diagram of a format of a field including an opaque extended community attribute. In this figure, fields including the opaque extended community attribute include a type field, a sub-type field, a value field, and a continuous (cont.) field (the cont. field is an optional field) of the extended community attribute. A value of the type field of the extended community attribute is 0x03 or 0x43, and indicates that the extended community attribute is the opaque extended community attribute. A value of the sub-type field may indicate that one sub-type of the attribute is an SoO attribute. The device identifier may be carried in the value field.

The foregoing possible implementations of the fields carrying the device identifier do not constitute a limitation on the technical solutions of this embodiment of this application, and a person skilled in the art may design the implementations based on an actual situation.

S103: The first network device sends the second route advertisement message to the second network device.

As mentioned above, the first route advertisement message may come from the route reflector. When the first route advertisement message comes from the route reflector, the second network device may be, for example, any one of the network device 205 or the network device 206 in FIG. 2, that is, the second network device may be a PE device.

S104: The second network device receives the second route advertisement message.

S105: The second network device determines whether the value of the second field in the second route advertisement message is a device identifier of the second network device; and if yes, determines that a route loop occurs, and performs S106; or if no, performs S107.

In this embodiment of this application, if the second network device determines that the value of the second field in the second route advertisement message is the device identifier of the second network device, it indicates that a route loop occurs; or if the value of the second field in the second route advertisement message is not the device identifier of the second network device, it indicates that no route loop occurs.

S106: In response to determining that the route loop occurs, the second network device discards the second route advertisement message, or sets forwarding information obtained based on the second route advertisement message to be invalid or lowers a priority of the forwarding information.

When a route loop occurs, the second network device may process the second route advertisement message in two possible implementations.

In a first possible implementation, if the second network device does not generate the corresponding forwarding information based on the routing information in the second route advertisement message, the second network device may directly discard the second route advertisement message.

In a second possible implementation, if the second network device has generated the corresponding forwarding information based on the routing information in the second route advertisement message, the second network device may set the forwarding information to be invalid or lower the priority of the forwarding information, so as to avoid forwarding a service packet based on the forwarding information, thereby preventing the service packet from entering a forwarding cycle.

Certainly, the foregoing two possible implementations do not constitute a limitation on the technical solutions provided in this embodiment of this application, and a person skilled in the art may design the implementations based on an actual situation.

S107: The second network device sends the second route advertisement message.

When no route loop occurs, the second network device may send the second route advertisement message to a next-hop device.

With reference to FIG. 2, when the network device 202 is the route reflector, when the network device 205 receives the BGP update message 2 from the network device 203, the value of the field representing the SoO attribute in the BGP update message 2 is the router ID of the network device 201, rather than a router ID of the network device 205. Therefore, the network device 205 determines that no route loop occurs. Then, the network device 205 may generate a BGP update message 3 based on the BGP update message 2, where the BGP update message 3 does not include the field representing the SoO attribute, and send the BGP update message 3 to the network device 202 based on the eBGP. Because the network device 202 is the route reflector, the network device 202 adds, to the BGP update message 3, the field representing the Originator ID attribute, where a value of the field is the router ID of the network device 205, to obtain a BGP update message 4, and sends the BGP update message 4 to the network device 203. After receiving the BGP update message 4, the network device 203 generates a BGP update message 5 based on the BGP update message 4, and sends the BGP update message 5 to the network device 205. The BGP update message 5 includes a value representing the SoO attribute, and the value representing the SoO attribute is the router ID of the network device 205. In this case, after receiving the BGP update message 5, when determining that the value representing the SoO attribute in the BGP update message 5 is the router ID of the network device 205, the network device 205 may discard the BGP update message 5, or set forwarding information obtained based on the BGP update message 5 to be invalid, or lower a priority of the forwarding information, so as to avoid forming a route loop: the network device 205-the network device 204-the network device 203-the network device 202-the network device 205 and prevent a service packet from entering a forwarding cycle in the route loop.

In addition, in some scenarios, a specific quantity of times of occurrence of the route loop may be allowed on the second network device. To be specific, when determining that a quantity of times of occurrence of the route loop exceeds a specific threshold, the second network device discards the second route advertisement message, or sets forwarding information obtained based on the second route advertisement message to be invalid or lowers a priority of the forwarding information. Specifically, the second network device may collect statistics in, by using a counter, a quantity of times of occurrence of the route loop. To be specific, each time the route loop occurs, a value of the counter is increased by 1. When the value of the counter reaches a specific threshold, the route advertisement message when the counter reaches the specific threshold is discarded, or the forwarding information obtained based on the route advertisement message is set to be invalid or the priority of the forwarding information is lowered.

In a possible implementation, the first network device may collect, in units of routes, statistics in the quantity of times of occurrence of the route loop. For example, the network device 205 collects statistics in the quantity of times of occurrence of the route loop on a route to the network device 201. If the value of the counter reaches the specific threshold, a route advertisement message that is received most recently and that corresponds to the route to the network device 201 is discarded, or the forwarding information corresponding to the route advertisement message is set to be invalid, or the priority of the forwarding information is lowered.

In another possible implementation, the first network device may collect, in units of forwarding information, statistics in the quantity of times of occurrence of the route loop. For example, the network device 205 collects statistics in the quantity of times of occurrence of the route loop on a particular piece of forwarding information of the route to the network device 201. If the value of the counter reaches the specific threshold, a route advertisement message that is received most recently and that corresponds to the forwarding information is discarded, or the forwarding information is set to be invalid or the priority of the forwarding information is lowered.

The foregoing possible implementations do not constitute a limitation on the technical solutions of this embodiment of this application, and a person skilled in the art may design the implementations based on an actual situation.

In conclusion, when the first route advertisement message cannot reach the second network device due to some reasons (for example, a cross-network reason), the first network device generates, based on the first route advertisement message, the second route advertisement message that can be sent to the second network device. The second field of the second route advertisement message carries the value of the first field in the first route advertisement message, so that the second network device can determine, based on whether the value of the second field is the device identifier of the second network device, whether a route loop occurs, to implement route loop check, thereby improving reliability of service packet transmission.

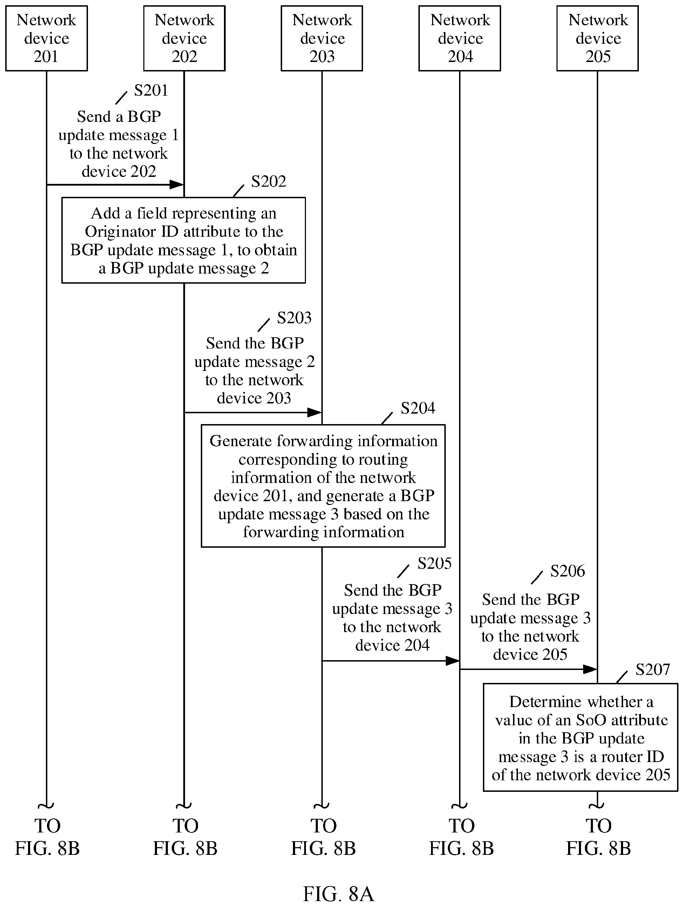

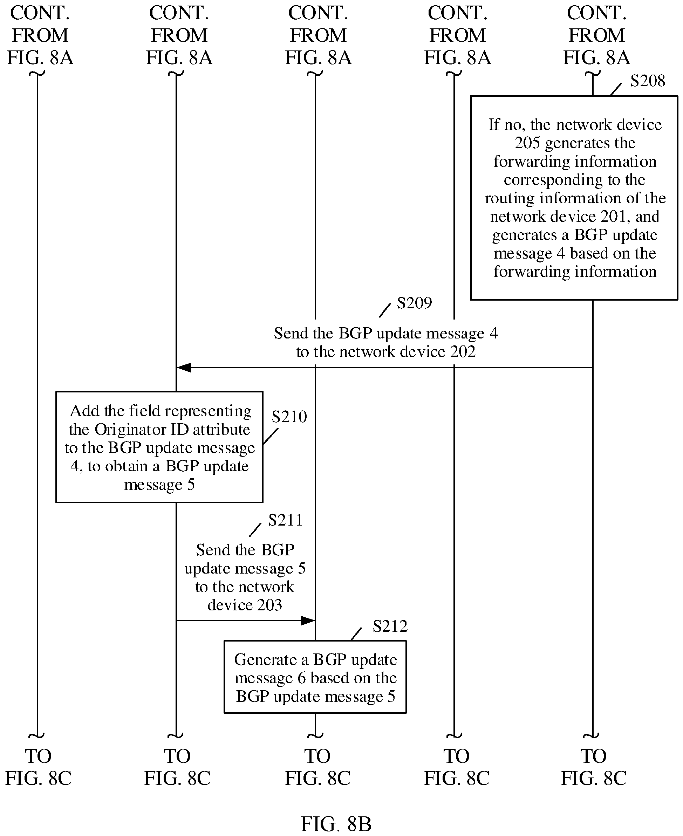

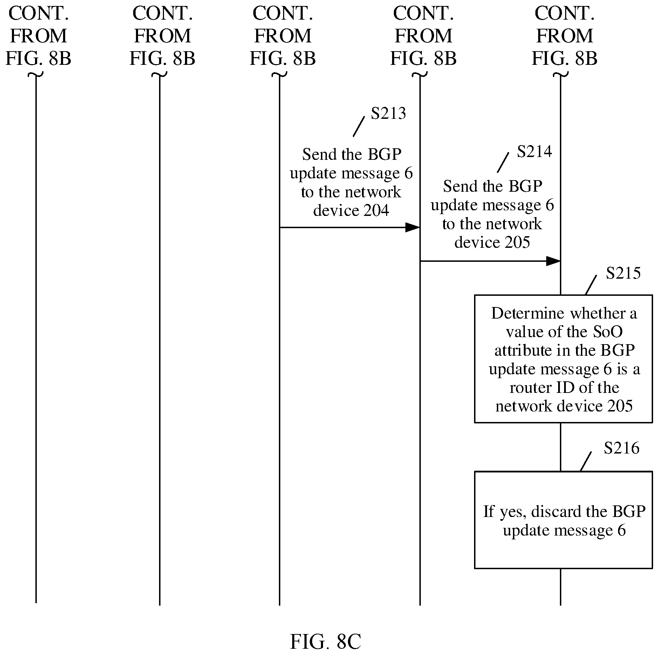

With reference to FIG. 2 and FIG. 8A to FIG. 8C, the following describes a route loop check method for overcoming a route loop problem in a cross-network domain scenario. FIG. 8A to FIG. 8C are a schematic flowchart of the route advertisement and route loop check method. The method specifically includes the following steps.

S201: A network device 201 sends a BGP update message 1 to a network device 202 based on an eBGP, where the BGP update message 1 carries routing information of the network device 201.

S202: After receiving the BGP update message 1, the network device 202 adds a field representing an Originator ID attribute to the BGP update message 1, to obtain a BGP update message 2, where a value of the field representing the Originator ID attribute is a router ID of the network device 201.

As mentioned above, the network device 202 is a route reflector.

S203: The network device 202 sends the BGP update message 2 to the network device 203 based on the eBGP.

S204: The network device 203 receives the BGP update message 2, generates forwarding information 1 of a private network route corresponding to the routing information of the network device 201, replicates the forwarding information 1 of the private network route to a VPNv4 routing table, and generates a BGP update message 3 based on forwarding information 1' that is in the VPNv4 routing table and that corresponds to the routing information of the network device 201, where the BGP update message 3 includes a field representing an SoO attribute, and a value of the field representing the SoO attribute is the router ID of the network device 201.

The forwarding information 1 of the private network route to the network device 201 may include the Originator ID attribute, and a value of the Originator ID attribute includes the router ID of the network device 201. The forwarding information replicated to the VPNv4 routing table may also include the router ID of the network device 201.

S205: The network device 203 sends the BGP update message 3 to a network device 204 based on an iBGP.

In this embodiment of this application, the network device 203 and the network device 204 may be BGP peers of each other.

S206: After receiving the BGP update message 3, the network device 204 sends the BGP update message 3 to a network device 205 based on the iBGP.

S207: After receiving the BGP update message 3, the network device 205 determines whether the value of the SoO attribute in the BGP update message 3 is a router ID of the network device 205.

Because the value of the SoO attribute in the BGP update message 3 is the router ID of the network device 201, a determining result of the network device 205 is no, that is, no route loop occurs.

S208: Based on the determining result of no, the network device 205 generates forwarding information 2 of a VPNv4 route corresponding to the routing information that is of the network device 201 and that is carried in the BGP update message 3, replicates the forwarding information 2 of the VPNv4 route to a private network routing table, and generates a BGP update message 4 based on forwarding information 2' that is in the private network routing table and that corresponds to the routing information of the network device 201, where the BGP update message 4 includes the routing information of the network device 201.

S209: The network device 205 sends the BGP update message 4 to the network device 202 based on the eBGP.

S210: After receiving the BGP update message 4, the network device 202 adds the field representing the Originator ID attribute to the BGP update message 4, to obtain a BGP update message 5, where a value of the field representing the Originator ID attribute is the router ID of the network device 205.

S211: The network device 202 sends the BGP update message 5 to the network device 203 based on the eBGP.

S212: After receiving the BGP update message 5, the network device 203 generates a BGP update message 6 based on the BGP update message 5, where a value of the SoO attribute in the BGP update message 6 is the router ID of the network device 205.

Optionally, after receiving the BGP update message 5, the network device 203 may replace the router ID of the network device 201 in the forwarding information 1 of the private network route to the network device 201 and in the forwarding information 1' of the VPNv4 routing table with the router ID of the network device 205. Therefore, the network device 203 may generate a BGP update message 6 based on updated forwarding information 1' of the VPNv4 routing table.

S213: The network device 203 sends the BGP update message 6 to the network device 204 based on the iBGP.

S214: After receiving the BGP update message 6, the network device 204 sends the BGP update message 6 to the network device 205 based on the iBGP.

S215: After receiving the BGP update message 6, the network device 205 determines whether a value of the SoO attribute is the router ID of the network device 205.

Because the value of the SoO attribute in the BGP update message 6 is the router ID of the network device 205, a determining result of the network device 204 is yes.

S216: The network device 205 discards the BGP update message 6 based on the determining result of yes.

Because the value of the SoO attribute in the BGP update message 5 is the router ID of the network device 205, the network device 205 may determine that the BGP update message sent by the network device 205 is returned to the network device 205. Therefore, to avoid forming a route loop, the network device 205 discards the BGP update message 5. In this way, a packet is not transmitted circularly along the network device 203-the network device 202-the network device 205-the network device 204-the network device 203, thereby ensuring transmission reliability.

In some examples, if a specific quantity of times (for example, twice) of occurrence of the route loop is allowed on the network device 205, when a first determining result of performing S216 is yes, the network device 205 may not discard the BGP update message 5, but continue to send the BGP update message 5 to the network device 202, and set a value of a counter to 1. Steps performed by the network device 202, the network device 203, and the network device 204 are similar to S210 to S214, and details are not described herein again until the BGP update message 5 reaches the network device 205 again. The network device 205 determines that the value of the SoO attribute carried in the BGP update message 5 is the router ID of the network device 205, and sets the value of the counter to 2. When determining that the value of the counter reaches a specific threshold, the network device 205 discards the BGP update message 5.

In addition, in the foregoing example, the network device 205 first determines whether the value of the SoO attribute field is the router ID of the network device 205, and if the value of the SoO attribute field is the router ID of the network device 205, generates forwarding information of the route corresponding to the routing information of the network device 201. Optionally, the network device 205 may alternatively first generate the forwarding information, and then determine whether the value of the SoO attribute field is the router ID of the network device 205. When a determining result is yes, the network device 205 may set the forwarding information to be invalid or lower a priority of the forwarding information, so as to avoid a route loop.

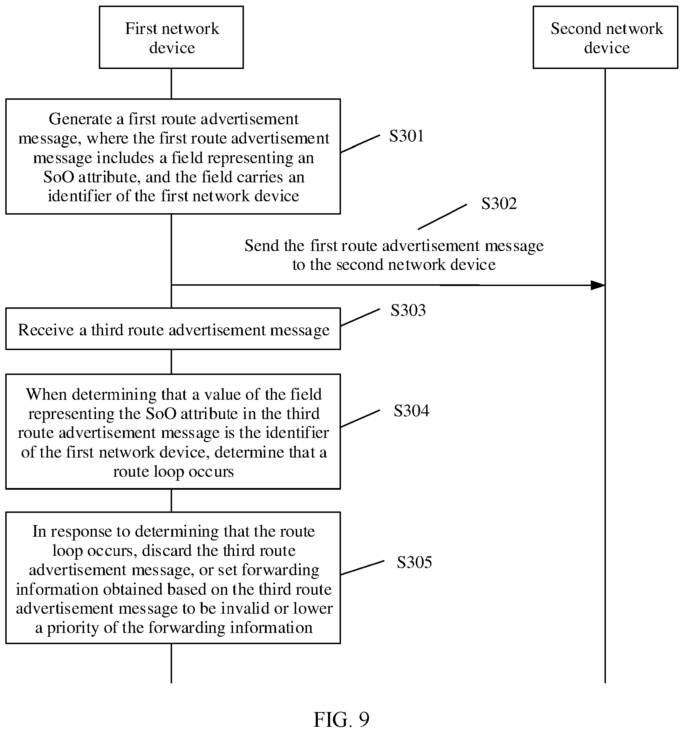

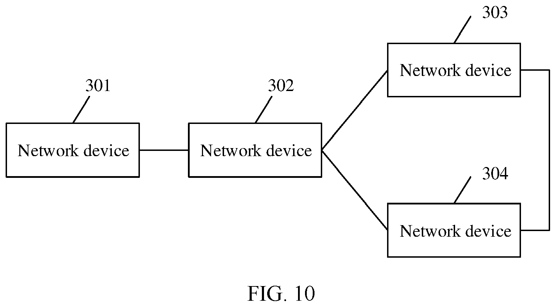

FIG. 9 is a flowchart of another route advertisement and route loop check method according to an embodiment of this application. The method may be applicable to a scenario of a network architecture without a route reflector. For example, FIG. 10 is a schematic diagram of a network architecture without a route reflector. The network architecture includes a network device 301, a network device 302, a network device 303, and a network device 304. The network device 301 is connected to the network device 302, the network device 302 is connected to the network device 303, the network device 303 is connected to the network device 304, and the network device 304 is connected to the network device 302. The network device 301, the network device 302, the network device 303, and the network device 304 may be physical devices such as a router (router), a switch (switch), and a server having a routing function, or may be virtual apparatuses having a routing or switch function.

The route advertisement and route loop check method shown in FIG. 9 includes the following steps.

S301: A first network device generates a first route advertisement message, where the first route advertisement message includes a field representing an SoO attribute, and the field representing the SoO attribute carries an identifier of the first network device.

In this embodiment of this application, the first network device may be, for example, the network device 302 in FIG. 10. The first network device may be a PE device, or may be a CE device. This is not specifically limited in this application.

The first route advertisement message generated by the first network device includes routing information. The routing information may be routing information of the first network device, or may be routing information of another device. The first route advertisement message may be a BGP update message. In addition to the routing information, the first route advertisement message may further include the field representing the SoO attribute. A value of the field representing the SoO attribute includes the identifier of the first network device. The identifier of the first network device may be, for example, a router ID of the first network device or a number of the first network device in a network. This is not specifically limited in this embodiment of this application.

In a possible implementation, the first network device may obtain a second route advertisement message, and add the field representing the SoO attribute to the second route advertisement message, to obtain the first route advertisement message. For a format of the field representing the SoO attribute, refer to the foregoing description. Details are not described herein again.

For example, the network device 302 generates a BGP update message. The BGP update message includes routing information of the network device 302 and the field representing the SoO attribute. A value of the field representing the SoO attribute is a router ID of the network device 302.

For another example, the network device 302 receives a BGP update message from the network device 301, and the BGP update message carries routing information of the network device 301. The network device 302 may add the field representing the SoO attribute to the BGP update message, and a value of the field representing the SoO attribute is the router ID of the network device 302.

S302: The first network device sends the first route advertisement message to a second network device.

In this embodiment of this application, the second network device is a next-hop network device of the first network device, and may be specifically a PE device, a P device, or a CE device, for example, the network device 303 in FIG. 10. This is not specifically limited in this embodiment of this application.

S303: The first network device receives a third route advertisement message, where the third route advertisement message includes the field representing the SoO attribute.

In this embodiment of this application, the first network device receives the third route advertisement message. The third route advertisement message and the first route advertisement message may be a same route advertisement message, or may be different route advertisement messages.

S304: When determining that the value of the field representing the SoO attribute in the third route advertisement message is the identifier of the first network device, the first network device determines that a route loop occurs.

When the first network device determines that the value of the field representing the SoO attribute in the received third route advertisement message is the identifier of the first network device, it indicates that routing information in the third route advertisement message is routing information that has been released by the first network device. Therefore, the first network device may determine that a route loop occurs.

For example, the network device 303 sends, to the network device 304, the BGP update message received from the network device 302, and the network device 304 sends the BGP update message to the network device 302. After receiving the BGP update message, the network device 302 determines that the value of the field representing the SoO attribute in the BGP update message is the router ID of the network device 302, and determines that a route loop occurs, that is, the BGP update message that has sent by the network device 302 returns to the network device.

S305: In response to determining that the route loop occurs, the first network device discards the third route advertisement message, or sets forwarding information obtained based on the third route advertisement message to be invalid or lowers a priority of the forwarding information.

In this embodiment of this application, after determining that the route loop occurs, the first network device may perform processing in two possible manners:

In a first possible implementation, if the first network device does not generate corresponding forwarding information based on the routing information in the third route advertisement message, the second network device may directly discard the third route advertisement message.

In a second possible implementation, if the first network device has generated the corresponding forwarding information based on the routing information in the third route advertisement message, the first network device may set the forwarding information to be invalid or lower the priority of the forwarding information, so as to avoid forwarding a packet based on the forwarding information, thereby preventing the packet from entering a forwarding cycle.

For example, after receiving the BGP update message from the network device 304, and determining that the route loop occurs, the network device 302 may directly discard the BGP update message, or set forwarding information of a route generated based on the routing information that is of the network device 301 and that is in the BGP update message to be invalid, or lower a priority of the forwarding information, so as to prevent a packet from entering a forwarding cycle.

In addition, in some scenarios, a specific quantity of times of occurrence of the route loop may be allowed on the first network device. To be specific, when determining that a quantity of times of occurrence of the route loop exceeds a specific threshold, the first network device discards the third route advertisement message, or sets forwarding information obtained based on the third route advertisement message to be invalid or lowers a priority of the forwarding information. Specifically, the first network device may collect statistics in, by using a counter, a quantity of times of occurrence of the route loop. To be specific, each time the route loop occurs, a value of the counter is increased by 1. When the value of the counter reaches a specific threshold, the route advertisement message when the counter reaches the specific threshold is discarded, or the forwarding information obtained based on the route advertisement message is set to be invalid or the priority of the forwarding information is lowered.

The first network device adds the field representing the SoO attribute to the released route advertisement message, where a value of the field is the identifier of the first network device, so that the first network device may determine, by determining whether the received route advertisement message includes the identifier of the first network device, whether the route loop occurs, thereby implementing route loop check and improving reliability of service packet transmission.

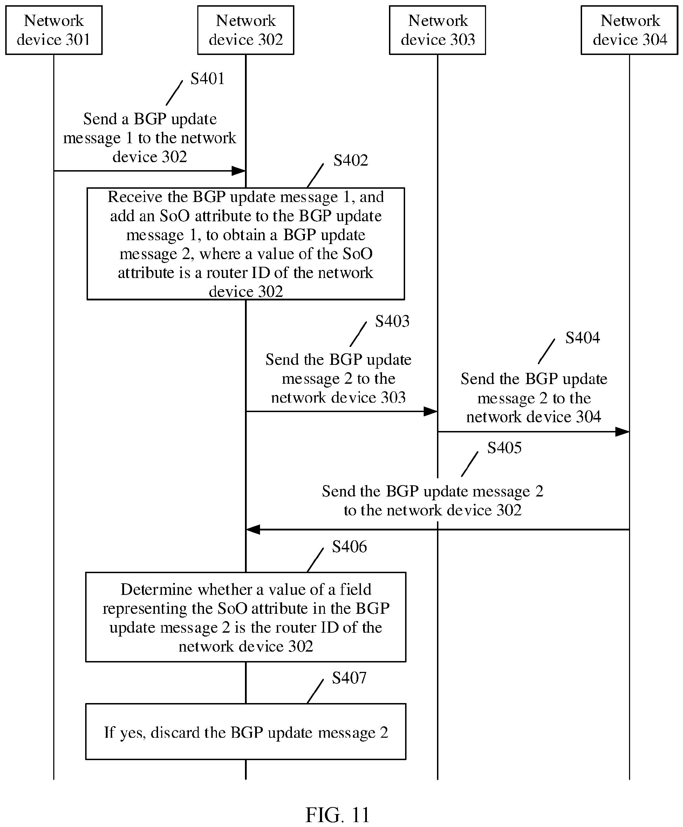

With reference to FIG. 10 and FIG. 11, the following describes in detail, by using an application scenario as an example, the route advertisement and route loop check method shown in FIG. 9. FIG. 11 is a schematic flowchart of the route advertisement and route loop check method. The method specifically includes the following steps.

S401: A network device 301 sends a BGP update message 1 to a network device 302, where the BGP update message 1 includes routing information of the network device 301.

In a first possible implementation, the network device 301 is a CE device, the network device 302 is a PE device, and the first route advertisement message includes routing information to the network device 301, or the first route advertisement message includes routing information to a user network connected to the network device 301.

S402: After receiving the BGP update message 1, the network device 302 generates forwarding information 1 of a route corresponding to the routing information of the network device 301, and adds a field representing an SoO attribute to the BGP update message 1, to obtain a BGP update message 2, where a value of the field representing the SoO attribute is a router ID of the network device 302.

A next hop of the forwarding information 1 of the route corresponding to the routing information of the network device 301 is the network device 301.

S403: The network device 302 sends the BGP update message 2 to a network device 303.

S404: After receiving the BGP update message 2, the network device 303 sends the BGP update message 2 to a network device 304.

S405: After receiving the BGP update message 2, the network device 304 sends the BGP update message 2 to the network device 302.

S406: The network device 302 determines whether a value of the field representing the SoO attribute in the BGP update message 2 is the router ID of the network device 302.

S407: If yes, the network device 302 discards the BGP update message 2.

When the network device 302 determines that the value of the SoO attribute in the BGP update message 2 is the router ID of the network device 302, it indicates that the BGP update message 2 released by the network device 302 is returned to the network device 302. Therefore, to avoid a route loop problem, the network device 302 discards the BGP update message 2, and does not generate corresponding forwarding information based on the BGP update message 2. In this way, a packet is not transmitted circularly among the network device 303 -the network device 302-the network device 303, thereby ensuring transmission reliability.

In some examples, if a specific quantity of times (for example, twice) of occurrence of the route loop is allowed on the network device 302, when a first determining result of performing S407 is yes, the network device 302 may not discard the BGP update message 2, but continue to send the BGP update message 2 to the network device 303, and set a value of a counter to 1. Steps performed by the network device 303 and the network device 304 are similar to S404 and S405, and details are not described herein again until the BGP update message 2 reaches the network device 302 again. The network device 302 determines that the value of the SoO attribute carried in the BGP update message 5 is the router ID of the network device 302, and sets the value of the counter to 2. When determining that the value of the counter reaches a specific threshold, the network device 302 discards the BGP update message 2.

In the foregoing example, after receiving the BGP update message 2, the network device 302 first determines whether the value of the field representing the SoO attribute in the BGP update message 2 is the router ID of the network device 302, and determines, based on a determining result, whether to generate corresponding forwarding information. In another example, the network device 302 may first generate forwarding information 2 of a corresponding route based on the routing information of the network device 301 in the BGP update message 2, where a next hop of the forwarding information 2 is the network device 304, and then determine whether the value of the field representing the SoO attribute in the BGP update message 2 is the router ID of the network device 302. Because a determining result is yes, the network device 302 may set the forwarding information 2 to be invalid and retain only the forwarding information 1; or the network device 302 lowers a priority of the forwarding information 2, to make the priority of the forwarding information 2 lower than a priority of the forwarding information 1, so that the network device 302 forwards a packet to the network device 301 by using the forwarding information 1, thereby preventing the packet from entering a forwarding cycle among the network device 302-the network device 303 -the network device 304-the network device 302.

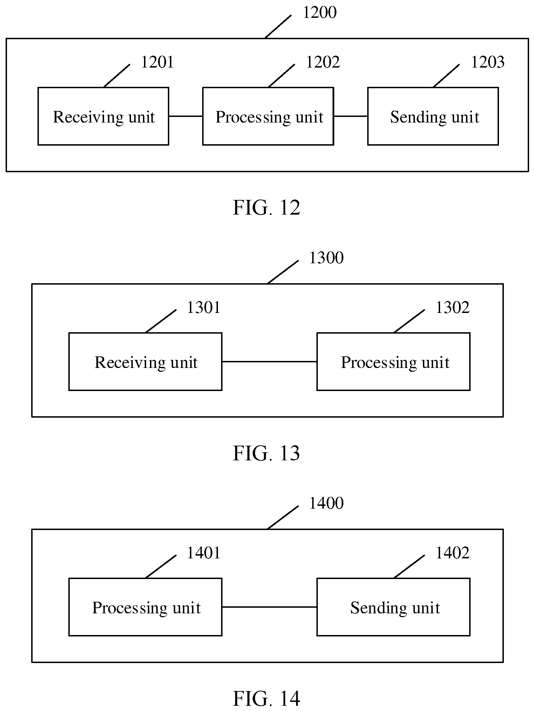

FIG. 12 is a schematic diagram of a possible structure of the network device in the foregoing embodiments. The network device 1200 may implement a function of the first network device in the example shown in FIG. 3, or the network device 1200 may implement a function of the network device 203 in the embodiment shown in FIG. 8A to FIG. 8C. With reference to FIG. 12, the network device 1200 includes a receiving unit 1201, a processing unit 1202, and a sending unit 1203. These units may perform corresponding functions of the first network device in the foregoing method examples. The receiving unit 1201 is configured to support the network device 1200 in performing S101 in FIG. 3, the processing unit 1202 is configured to support the network device 1200 in performing S102 in FIG. 3, and the sending unit 1203 is configured to support the network device 1200 in performing S103 in FIG. 3, and/or another process performed by the first network device in the technology described in this specification. For example, the receiving unit 1201 is configured to receive a first route advertisement message, where a first field of the first route advertisement message includes a device identifier, and routing information included in the first route advertisement message comes from a device corresponding to the device identifier; the processing unit 1202 is configured to generate a second route advertisement message based on the first route advertisement message, where a second field of the second route advertisement message includes the device identifier, and the first field and the second field are different fields; and the sending unit 1203 is configured to send the second route advertisement message to a second network device. For a specific execution process, refer to detailed descriptions of corresponding steps in the embodiment shown in FIG. 3 or FIG. 8A to FIG. 8C. Details are not described herein again.

It should be noted that, in this embodiment of this application, division into the units is an example, and is merely a logical function division. In actual implementation, another division manner may be used. Functional units in this embodiment of this application may be integrated into one processing unit, or each of the units may exist alone physically, or two or more units are integrated into one unit. For example, in the foregoing embodiment, the obtaining unit and the processing unit may be a same unit or different units. The integrated unit may be implemented in a form of hardware, or may be implemented in a form of a software functional unit.

FIG. 13 is a schematic diagram of a possible structure of the network device in the foregoing embodiments. The network device 1300 may implement a function of the second network device in the example shown in FIG. 3, or the network device 1300 may implement a function of the network device 205 in the embodiment shown in FIG. 8A to FIG. 8C. With reference to FIG. 13, the network device 1300 includes a receiving unit 1301 and a processing unit 1302. These units may perform corresponding functions of the second network device in the foregoing method examples. For example, the receiving unit 1301 is configured to receive a second route advertisement message from a first network device, where the second route advertisement message includes a field representing a source of origin SoO attribute; and the processing unit 1302 is configured to: when determining that a value of the field representing the source of origin SoO attribute is an identifier of the second network device, determine that a route loop occurs. For a specific execution process, refer to detailed descriptions of corresponding steps in the embodiment shown in FIG. 3 or FIG. 8A to FIG. 8C. Details are not described herein again.

FIG. 14 is a schematic diagram of a possible structure of the network device in the foregoing embodiments. The network device 1400 may implement a function of the first network device in the example shown in FIG. 9, or the network device 1400 may implement a function of the network device 302 in the embodiment shown in FIG. 11. With reference to FIG. 14, the network device 1400 includes a processing unit 1401 and a sending unit 1402. These units may perform corresponding functions of the second network device in the foregoing method examples. For example, the processing unit 1401 is configured to generate a first route advertisement message, where the first route advertisement message includes a field representing a source of origin SoO attribute, and the field representing the SoO attribute carries an identifier of the first network device; and the sending unit 1402 is configured to send the first route advertisement message to a second network device. For a specific execution process, refer to detailed descriptions of corresponding steps in the embodiment shown in FIG. 9 or FIG. 11. Details are not described herein again.

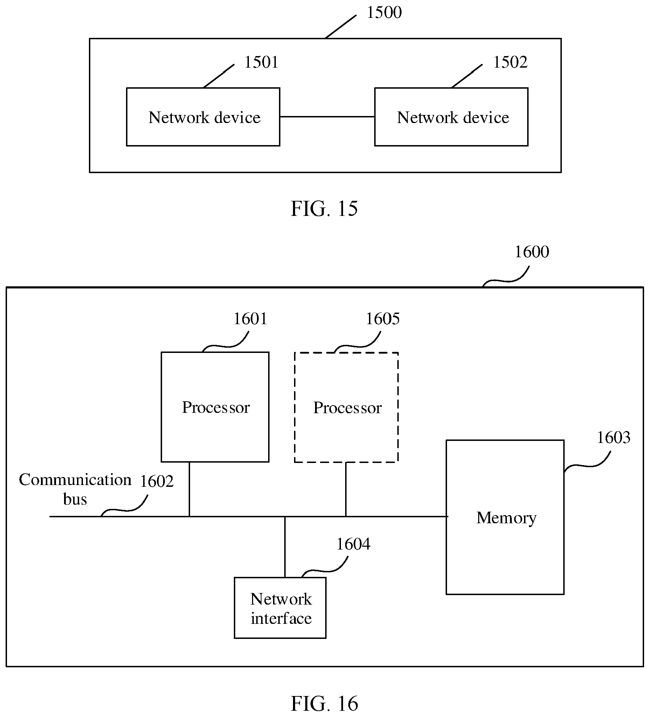

With reference to FIG. 15, an embodiment of the present invention provides a network system 1500. The system 1500 is configured to implement the route advertisement and route loop check method in the foregoing method embodiments. The system 1500 includes a network device 1501 and a network device 1502. The network device 1501 may implement a function of the first network device in the embodiment shown in FIG. 3, the network device 203 in the embodiment shown in FIG. 8A to FIG. 8C, or the network device 1300 in FIG. 13. The network device 1502 may implement a function of the second network device in the embodiment shown in FIG. 3, the network device 205 in the embodiment shown in FIG. 8A to FIG. 8C, or the network device 1400 in FIG. 14. Alternatively, the network device 1501 may implement a function of the first network device in the embodiment shown in FIG. 9, the network device 302 in the embodiment shown in FIG. 11, or the network device 1400 in FIG. 14, and the network device 1502 may implement a function of the second network device in the embodiment shown in FIG. 9 or the network device 303 in the embodiment shown in FIG. 11. For a specific execution process, refer to the detailed descriptions of corresponding steps in the embodiment shown in FIG. 3, FIG. 8A to FIG. 8C, FIG. 9, or FIG. 33. Details are not described herein again.

FIG. 16 is a schematic diagram of a structure of a device 1600 according to an embodiment of this application. The network device 1200 in FIG. 12, the network device 1300 in FIG. 13, and the network device 1400 in FIG. 14 may be implemented by using the device shown in FIG. 16. With reference to FIG. 16, the device 1600 includes at least one processor 1601, a communication bus 1602, and at least one network interface 1604. Optionally, the device 1600 may further include a memory 1603.

The processor 1601 may be a general-purpose central processing unit (central processing unit, CPU), an application-specific integrated circuit (application-specific integrated circuit, ASIC), or one or more integrated circuits (integrated circuit, IC) configured to control program execution of the solutions of this application. The processor may be configured to process a packet, to implement the route advertisement and route loop check method provided in embodiments of this application.

For example, when the first network device in FIG. 3 is implemented by using the device shown in FIG. 16, the processor may be configured to: receive a first route advertisement message, generate a second route advertisement message based on the first route advertisement message, and send the second route advertisement message to a second network device. For a specific function implementation, refer to a processing part corresponding to the first network device in the method embodiment. For another example, when the second network device in FIG. 3 is implemented by using the device shown in FIG. 16, the processor may be configured to: receive a second route advertisement message from a first network device, where the second route advertisement message includes a field representing a source of origin SoO attribute; and when determining that a value of the field representing the source of origin SoO attribute is an identifier of the second network device, determine that a route loop occurs. For a specific function implementation, refer to a processing part of the second network device in the method embodiment. For another example, when the first network device in FIG. 9 is implemented by using the device shown in FIG. 16, the processor may generate a first route advertisement message, where the first route advertisement message includes a field representing a source of origin SoO attribute, and the field representing the SoO attribute carries an identifier of the first network device; and the processor sends the first route advertisement message to a second network device. For a specific function implementation, refer to a processing part of the second network device in the method embodiment.

The communication bus 1602 is configured to transmit information between the processor 1601, the network interface 1604, and the memory 1603.

The memory 1603 may be a read-only memory (read-only memory, ROM) or another type of static storage device that may store static information and instructions, or may be a random access memory (random access memory, RAM), or another type of dynamic storage device that may store information and instructions, or may be a compact disc read-only memory (compact disc read-only memory, CD-ROM), or other optical disk storage, optical disc storage (including a compact disc, a laser disc, an optical disc, a digital versatile disc, a Blu-ray disc, and the like), a disk storage medium or another magnetic storage device, or any other medium that can be used for carrying or storing expected program code in a form of an instruction or a data structure and that can be accessed by a computer, but is not limited thereto. The memory 1603 may exist independently, and is connected to the processor 1601 by using the communication bus 1602. Alternatively, the memory 1603 may be integrated with the processor 1601.

Optionally, the memory 1603 is configured to store program code or instructions for executing the solutions of this application, and the processor 1601 controls the execution. The processor 1601 is configured to execute the program code or instructions stored in the memory 1603. The program code may include one or more software modules. Optionally, the processor 1601 may also store program code or instructions for executing the solutions of this application. In this case, the processor 1601 does not need to read the program code or instructions from the memory 1603.

The network interface 1604 may be an apparatus such as a transceiver, and is configured to communicate with another device or a communication network. The communication network may be the Ethernet, a radio access network (RAN), a wireless local area network (wireless local area networks, WLAN), or the like. In this embodiment of this application, the network interface 1604 may be configured to: receive a packet sent by another node in a segment routing network, or send a packet to another node in the segment routing network. The network interface 1604 may be an Ethernet interface (ethernet) interface, a fast Ethernet (fast ethernet, FE) interface, a gigabit Ethernet (gigabit ethernet, GE) interface, or the like.

In a specific implementation, in an embodiment, the device 1600 may include a plurality of processors, for example, the processor 1601 and the processor 405 shown in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

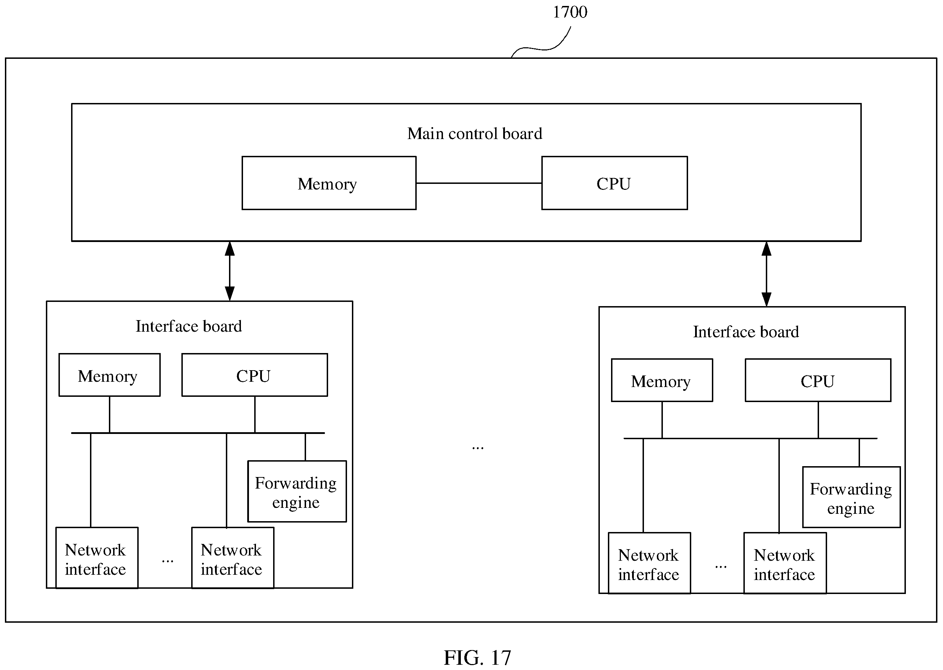

FIG. 17 is a schematic diagram of a structure of a device 1700 according to an embodiment of this application. The first network device and the second network device in FIG. 3 and the first network device in FIG. 9 may be implemented by using the device shown in FIG. 17. With reference to the schematic diagram of the structure of the device shown in FIG. 17, the device 1700 includes a main control board and one or more interface boards. The main control board is communicatively connected to the interface board. The main control board is also referred to as a main processing unit (main processing unit, MPU) or a route processing card (route processor card). The main control board includes a CPU and a memory. The main control board is responsible for controlling and managing components in the device 1700, including functions of route calculation and device management and maintenance. The interface board is also referred to as a line processing unit (line processing unit, LPU) or a line card (line card), and is configured to receive and send a packet. In some embodiments, the main control board communicates with the interface board or interface boards communicate with each other by using a bus. In some embodiments, the interface boards communicate with each other by using a switch fabric unit. In this case, the device 1700 also includes a switch fabric unit. The switch fabric unit is communicatively connected to the main control board and the interface boards. The switch fabric unit is configured to forward data between the interface boards. The switch fabric unit may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is communicatively connected to the memory, the forwarding engine, and the interface card separately. The memory is configured to store a forwarding table. The forwarding engine is configured to: forward a received packet based on a forwarding table stored the memory, and if a destination address of the received packet is an IP address of the device 1700, send the packet to a CPU of the main control board or the interface board for processing; or if the destination address of the received packet is not the IP address of the device 1700, search the forwarding table based on the destination address, and if a next hop and an outbound interface that correspond to the destination address are found in the forwarding table, forward the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform a function of the forwarding engine, for example, implementing soft forwarding based on a general-purpose CPU, so that no forwarding engine is required in the interface board. In some embodiments, the forwarding engine may be implemented by using an ASIC or a field programmable gate array (field programmable gate array, FPGA). In some embodiments, the memory that stores the forwarding table may alternatively be integrated in the forwarding engine, and is used as a part of the forwarding engine.

An embodiment of this application further provides a chip system, including a processor. The processor is coupled to a memory. The memory is configured to store a program or instructions. When the program or the instructions are executed by the processor, the chip system is enabled to implement the method performed by the first network device or the second network device in the embodiment shown in FIG. 3, or the method performed by the first network device in the embodiment shown in FIG. 9.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions. When the instructions are run on a computer, the computer is enabled to perform the methods in the embodiments.

In this specification, claims, and accompanying drawings of this application, the terms "first", "second", "third", "fourth", and the like are intended to distinguish similar objects but do not need to be used to describe a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this application, "at least one item (piece)" means one or more, and "a plurality of means two or more. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and A and B.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, unit division is merely logical module division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A route advertisement method, comprising:
receiving, by a first network device, a first route advertisement message, wherein a first field of the first route advertisement message comprises a device identifier, and routing information comprised in the first route advertisement message comes from a device corresponding to the device identifier;
generating, by the first network device, a second route advertisement message based on the first route advertisement message, wherein a second field of the second route advertisement message comprises the device identifier, and the first field and the second field are different fields; and
sending, by the first network device, the second route advertisement message to a second network device.

2. The method according to claim 1, wherein the generating, by the first network device, a second route advertisement message based on the first route advertisement message comprises:
generating, by the first network device, the second route advertisement message based on the routing information comprised in the first route advertisement message, wherein the second route advertisement message comprises the routing information.

3. The method according to claim 1, wherein the generating, by the first network device, a second route advertisement message based on the first route advertisement message comprises:
generating, by the first network device, a corresponding route based on the routing information comprised in the first route advertisement message; and
generating, by the first network device, the second route advertisement message based on the route.

4. The method according to claim 3, wherein the generating, by the first network device, a corresponding route based on the routing information comprised in the first route advertisement message comprises:
generating, by the first network device, a corresponding private network route based on the routing information comprised in the first route advertisement message; and
the generating, by the first network device, the second route advertisement message based on the route comprises:
replicating, by the first network device, the private network route to a virtual private network version 4 VPNv4 route, and generating the second route advertisement message based on the VPNv4 route.

5. The method according to claim 1, wherein the generating, by the first network device, a second route advertisement message based on the first route advertisement message comprises:
deleting, by the first network device, the first field of the first route advertisement message, and adding the second field, to obtain the second route advertisement message.

6. The method according to any one of claims 1 to 5, wherein the first network device is a first provider edge PE device, and the receiving, by a first network device, a first route advertisement message comprises:
receiving, by the first network device, the first route advertisement message sent by a route reflector RR.

7. The method according to claim 6, wherein the RR is a customer edge CE device.

8. The method according to any one of claims 1 to 7, wherein the first route advertisement message and the second route advertisement message are both border gateway protocol update BGP update messages.

9. The method according to claim 8, wherein the second field is a field representing a source of origin SoO attribute.

10. The method according to claim 9, wherein the field representing the SoO attribute comprises a global administrator global administrator field in an autonomous system specific extended community AS specific extended community attribute of the BGP update message or a global administrator field in an internet protocol version 4 address specific extended community IPv4 address specific extended community attribute of the BGP update message.

11. The method according to claim 10, wherein the field representing the SoO attribute further comprises a local administrator local administrator field in the AS specific extended community attribute or a local administrator field in the IPv4 address specific extended community attribute.

12. The method according to claim 9, wherein the field representing the SoO attribute comprises a value value field in an opaque extended community opaque extended community attribute.

13. A route loop check method, wherein the method comprises:
receiving, by a second network device, a second route advertisement message from a first network device, wherein the second route advertisement message comprises a field representing a source of origin SoO attribute; and
when the second network device determines that a value of the field representing the source of origin SoO attribute is an identifier of the second network device, determining, by the second network device, that a route loop occurs.

14. The method according to claim 13, wherein the method further comprises:
in response to determining that the route loop occurs, discarding, by the second network device, the second route advertisement message, or setting forwarding information obtained based on the second route advertisement message to be invalid or lowering a priority of the forwarding information.

15. The method according to claim 13, wherein the method further comprises:
when determining that a quantity of times of occurrence of the route loop exceeds a specific threshold, discarding, by the second network device, the second route advertisement message, or setting forwarding information obtained based on the second route advertisement message to be invalid or lowering a priority of the forwarding information.

16. The method according to claim 15, wherein the specific threshold is equal to 1, or the specific threshold is a positive integer greater than 1.

17. The method according to any one of claims 13 to 16, wherein the method further comprises:
receiving, by the second network device, a first route advertisement message from the first network device, wherein the first route advertisement message comprises routing information and the field representing the source of origin SoO attribute;
when the second network device determines that the value of the field representing the SoO attribute in the first route advertisement message is not the identifier of the second network device, generating, by the second network device, a third route advertisement message based on the routing information, wherein the third route advertisement message comprises the routing information; and
sending, by the second network device, the third route advertisement message to a route reflector RR.

18. The method according to any one of claims 13 to 17, wherein the first network device and the second network device are both provider edge PE devices.

19. The method according to any one of claims 13 to 18, wherein the field representing the SoO attribute comprises a global administrator global administrator field in an autonomous system specific extended community AS specific extended community attribute or in an internet protocol version 4 address specific extended community IPv4 address specific extended community attribute.

20. The method according to claim 19, wherein the field representing the SoO attribute further comprises a local administrator local administrator field in the AS specific extended community attribute or in the IPv4 address specific extended community attribute.

21. The method according to any one of claims 13 to 18, wherein the field representing the SoO attribute comprises a value value field in an opaque extended community opaque extended community attribute.

22. The method according to any one of claims 13 to 21, wherein the identifier of the second network device is a router identifier router ID of the second network device.

23. A route advertisement method, wherein the method comprises:
generating, by a first network device, a first route advertisement message, wherein the first route advertisement message comprises a field representing a source of origin SoO attribute, and the field representing the SoO attribute carries an identifier of the first network device; and
sending, by the first network device, the first route advertisement message to a second network device.

24. The method according to claim 23, wherein the generating, by a first network device, a first route advertisement message comprises:
obtaining, by the first network device, a second route advertisement message; and
adding, by the first network device, the field representing the SoO attribute to the second route advertisement message, to obtain the first route advertisement message.

25. The method according to claim 23 or 24, wherein the method further comprises:
receiving, by the first network device, a third route advertisement message, wherein the third route advertisement message comprises the field representing the SoO attribute; and
when the first network device determines that a value of the field representing the SoO attribute in the third route advertisement message is the identifier of the first network device, determining, by the first network device, that a route loop occurs.

26. The method according to claim 25, wherein the method further comprises:
in response to determining that the route loop occurs, discarding, by the first network device, the third route advertisement message, or setting forwarding information obtained based on the third route advertisement message to be invalid or lowering a priority of the forwarding information.

27. The method according to claim 25, wherein the method further comprises:
when determining that a quantity of times of occurrence of the route loop exceeds a specific threshold, discarding, by the first network device, the third route advertisement message, or setting forwarding information obtained based on the third route advertisement message to be invalid or lowering a priority of the forwarding information.

28. The method according to claim 27, wherein the specific threshold is equal to 1, or the specific threshold is a positive integer greater than 1.

29. The method according to any one of claims 23 to 28, wherein the field representing the SoO attribute comprises a global administrator global administrator field in an autonomous system specific extended community AS specific extended community attribute or a global administrator field in an internet protocol version 4 address specific extended community IPv4 address specific extended community attribute.

30. The method according to claim 29, wherein the field representing the SoO attribute further comprises a local administrator local administrator field in the AS specific extended community attribute or a local administrator field in the IPv4 address specific extended community attribute.

31. The method according to any one of claims 23 to 28, wherein the field representing the SoO attribute comprises a value value field in an opaque extended community opaque extended community attribute.

32. The method according to any one of claims 23 to 31, wherein the identifier of the first network device is a router identifier router ID of the first network device.

33. The method according to any one of claims 23 to 32, wherein the first network device and the second network device are both provider edge PE devices.

34. A network device, used in a network system comprising a plurality of network devices, wherein the plurality of network devices comprise a first network device and a second network device, the network device is the first network device, and the network device comprises:
a receiving unit, configured to receive a first route advertisement message, wherein a first field of the first route advertisement message comprises a device identifier, and routing information comprised in the first route advertisement message comes from a device corresponding to the device identifier;
a processing unit, configured to generate a second route advertisement message based on the first route advertisement message, wherein a second field of the second route advertisement message comprises the device identifier, and the first field and the second field are different fields; and
a sending unit, configured to send the second route advertisement message to the second network device.

35. The network device according to claim 34, wherein
the processing unit is configured to generate the second route advertisement message based on the routing information comprised in the first route advertisement message, wherein the second route advertisement message comprises the routing information.

36. The network device according to claim 34, wherein
the processing unit is configured to: generate a corresponding route based on the routing information comprised in the first route advertisement message, and generate the second route advertisement message based on the route.

37. The network device according to claim 36, wherein
the processing unit is configured to: generate a corresponding private network route based on the routing information comprised in the first route advertisement message, replicate the private network route to a virtual private network version 4 VPNv4 route, and generate the second route advertisement message based on the VPNv4 route.

38. The network device according to claim 34, wherein
the processing unit is configured to: delete the first field of the first route advertisement message, and add the second field, to obtain the second route advertisement message.

39. The network device according to any one of claims 34 to 38, wherein the first route advertisement message and the second route advertisement message are both border gateway protocol update BGP update messages.

40. The network device according to claim 39, wherein the second field is a field representing a source of origin SoO attribute.

41. A network device, used in a network system comprising a plurality of network devices, wherein the plurality of network devices comprise a first network device and a second network device, the network device is the second network device, and the network device comprises:
a receiving unit, configured to receive a second route advertisement message from the first network device, wherein the second route advertisement message comprises a field representing a source of origin SoO attribute; and
a processing unit, configured to: when determining that a value of the field representing the source of origin SoO attribute is an identifier of the second network device, determine that a route loop occurs.

42. The network device according to claim 41, wherein
the processing unit is further configured to: in response to determining that the route loop occurs, discard the second route advertisement message, or set forwarding information obtained based on the second route advertisement message to be invalid or lower a priority of the forwarding information.

43. The network device according to claim 41, wherein
the processing unit is further configured to: when determining that a quantity of times of occurrence of the route loop exceeds a specific threshold, discard the second route advertisement message, or set forwarding information obtained based on the second route advertisement message to be invalid or lower a priority of the forwarding information.

44. The network device according to any one of claims 41 to 43, further comprising a sending unit, wherein
the receiving unit is further configured to receive a first route advertisement message from the first network device, wherein the first route advertisement message comprises routing information and the field representing the source of origin SoO attribute;
the processing unit is further configured to: when determining that the value of the field representing the SoO attribute in the first route advertisement message is not the identifier of the second network device, generate a third route advertisement message based on the routing information, wherein the third route advertisement message comprises the routing information; and
the sending unit is configured to send the third route advertisement message to a route reflector RR.

45. A network device, used in a network system comprising a plurality of network devices, wherein the plurality of network devices comprise a first network device and a second network device, the network device is the first network device, and the network device comprises:
a processing unit, configured to generate a first route advertisement message, wherein the first route advertisement message comprises a field representing a source of origin SoO attribute, and the field representing the SoO attribute carries an identifier of the first network device; and
a sending unit, configured to send the first route advertisement message to the second network device.

46. The network device according to claim 45, wherein
the processing unit is configured to: obtain a second route advertisement message, and add the field representing the SoO attribute to the second route advertisement message, to obtain the first route advertisement message.

47. The network device according to claim 45 or 46, wherein the network device further comprises:
a receiving unit, configured to receive a third route advertisement message, wherein the third route advertisement message comprises the field representing the SoO attribute; and
the processing unit is further configured to: when determining that a value of the field representing the SoO attribute in the third route advertisement message is the identifier of the first network device, determine that a route loop occurs.

48. The network device according to claim 47, wherein
the processing unit is further configured to: in response to determining that the route loop occurs, discard the third route advertisement message, or set forwarding information obtained based on the third route advertisement message to be invalid or lower a priority of the forwarding information.

49. The network device according to claim 47, wherein the network device further comprises:
the processing unit is further configured to: when determining that a quantity of times of occurrence of the route loop exceeds a specific threshold, discard the third route advertisement message, or set forwarding information obtained based on the third route advertisement message to be invalid or lower a priority of the forwarding information.

50. A network system, wherein the network system comprises the first network device according to any one of claims 34 to 40 and the second network device according to any one of claims 41 to 44.

51. A network system, wherein the network system comprises the first network device and the second network device according to any one of claims 45 to 49.

52. A computer-readable storage medium, comprising instructions, a program, or code, wherein when the instructions, the program, or the code is executed on a computer, the computer is enabled to perform the method according to any one of claims 1 to 33.

53. A chip, comprising a memory and a processor, wherein the memory is configured to store instructions or program code, and the processor is configured to invoke the instructions or the program code from the memory and run the instructions or the program code, to perform the method according to any one of claims 1 to 33.
